# EUROPÄISCHE PATENTANMELDUNG

(11) **EP 4 567 309 A1**
(43) Veröffentlichungstag der Anmeldung: **11.06.2025**
(21) Anmeldenummer: 24213475.7
(22) Anmeldetag: 18.11.2024
(51) Int. Cl.: F16K 1/226, H01M 8/04, F16K 25/00

(54) **VENTIL, INSBESONDERE FÜR EIN BRENNSTOFFZELLENSYSTEM**

(30) Priorität: 08.12.2023 DE 102023134378; 17.01.2024 DE 102024101222
(71) Anmelder: Purem GmbH, 66539 Neunkirchen (DE)
(72) Erfinder: Hänisch, Jan, Neuhausen (DE); Grün, Matthias, Altbach (DE); Wacker, Andreas, Plochingen (DE); Novosel, Milijenko, Stuttgart (DE)
(74) Vertreter: Ruttensperger Lachnit Trossin Gomoll

(57) **Zusammenfassung**

Ein Ventil, insbesondere für ein Brennstoffzellensystem, umfassend ein um eine Schwenkachse (S) zwischen einer Offenstellung und einer Schließstellung verschwenkbares, scheibenartiges Ventilelement (66), wobei an einem Außenumfangsbereich des Ventilelements (66) eine ringartige Ventilelement-Dichtfläche (74) vorgesehen ist, sowie einen eine Ventilöffnung (50) umgebenden, ringartigen Ventilsitz (48), wobei an einem Innenumfangsbereich des Ventilsitzes (48) eine eine Ventilöffnung-Mittenachse ringartig umgebende, in der Schließstellung des Ventilelements (66) mit der Ventilelement-Dichtfläche (74) in Kontakt stehende Ventilsitz-Dichtfläche (70) vorgesehen ist, wobei der Ventilsitz (48) ein ringartiges Ventilsitz-Trägerelement (52) und ein an dem Ventilsitz-Trägerelement (52) getragenes, ringartiges Ventilsitz-Dichtelement (72) umfasst, wobei die Ventilsitz-Dichtfläche (70) an dem Ventilsitz-Dichtelement (72) vorgesehen ist, wobei das Ventilsitz-Trägerelement (56) einen das Ventilsitz-Dichtelement (72) gegen Bewegung nach radial außen bezüglich der Ventilöffnung-Mittenachse stützenden Trägerelementkörperabschnitt (76) aufweist, wobei das Ventilsitz-Dichtelement (72) an einer axialen Seite des Trägerelementkörperabschnitts (76) einen bezüglich der Ventilöffnung-Mittenachse axial über den Trägerelementkörperabschnitt (76) hervorstehenden Dichtabschnitt aufweist, ist dadurch gekennzeichnet, dass im Wesentlichen die ganze Ventilsitz-Dichtfläche (70) an dem Dichtabschnitt (78) ausgebildet ist.

## Beschreibung

Die vorliegende Erfindung betrifft ein Ventil, insbesondere für ein Brennstoffzellensystem, umfassend ein um eine Schwenkachse zwischen einer Offenstellung und einer Schließstellung verschwenkbares, scheibenartiges Ventilelement, wobei an einem Außenumfangsbereich des Ventilelements eine ringartige Ventilelement-Dichtfläche vorgesehen ist, sowie einen eine Ventilöffnung umgebenden, ringartigen Ventilsitz, wobei an einem Innenumfangsbereich des Ventilsitzes eine eine Ventilöffnung-Mittenachse ringartig umgebende, in der Schließstellung des Ventilelements mit der Ventilelement-Dichtfläche in Kontakt stehende Ventilsitz-Dichtfläche vorgesehen ist, wobei der Ventilsitz ein ringartiges Ventilsitz-Trägerelement und ein an dem Ventilsitz-Trägerelement getragenes, ringartiges Ventilsitz-Dichtelement umfasst, wobei die Ventilsitz-Dichtfläche an dem Ventilsitz-Dichtelement vorgesehen ist, wobei das Ventilsitz-Trägerelement einen das Ventilsitz-Dichtelement gegen Bewegung nach radial außen bezüglich der Ventilöffnung-Mittenachse stützenden Trägerelementkörperabschnitt aufweist, wobei das Ventilsitz-Dichtelement an einer axialen Seite des Trägerelementkörperabschnitts einen bezüglich der Ventilöffnung-Mittenachse axial über den Trägerelementkörperabschnitt hervorstehenden Dichtabschnitt aufweist.

Ein derartiges als doppelexzentrisches Ventil ausgebildetes Ventil ist aus der DE 11 2018 003 561 T5 bekannt. Bei diesem Ventil ist die Ventilsitz-Dichtfläche des Trägerelementkörperabschnitts des Ventilsitz-Trägerelements in Richtung der Ventilöffnung-Mittenachse derart positioniert, dass etwa die Hälfte der axialen Ausdehnung der Ventilsitz-Dichtfläche an dem axial über den Trägerelementkörperabschnitt hervorstehenden Dichtabschnitt des Ventilsitz-Dichtelements ausgebildet ist, und der verbleibende Teil der Ventilsitz-Dichtfläche sich axial mit dem Trägerelementkörperabschnitt überlappent.

Es ist die Aufgabe der vorliegenden Erfindung, ein Ventil, insbesondere für ein Brennstoffzellensystem vorzusehen, welches eine verbesserte Dichtwirkung bei vermindertem Verschleiß des Ventilsitz-Dichtelements aufweist.

Erfindungsgemäß wird diese Aufgabe gelöst durch ein Ventil, insbesondere für ein Brennstoffzellensystem, umfassend:
- ein um eine Schwenkachse zwischen einer Offenstellung und einer Schließstellung verschwenkbares, scheibenartiges Ventilelement, wobei an einem Außenumfangsbereich des Ventilelements eine ringartige Ventilelement-Dichtfläche vorgesehen ist,
- einen eine Ventilöffnung umgebenden, ringartigen Ventilsitz, wobei an einem Innenumfangsbereich des Ventilsitzes eine eine Ventilöffnung-Mittenachse ringartig umgebende, in der Schließstellung des Ventilelements mit der Ventilelement-Dichtfläche in Kontakt stehende Ventilsitz-Dichtfläche vorgesehen ist, wobei der Ventilsitz ein ringartiges Ventilsitz-Trägerelement und ein an dem Ventilsitz-Trägerelement getragenes, ringartiges Ventilsitz-Dichtelement umfasst, wobei die Ventilsitz-Dichtfläche an dem Ventilsitz-Dichtelement vorgesehen ist, wobei das Ventilsitz-Trägerelement einen das Ventilsitz-Dichtelement gegen Bewegung nach radial außen bezüglich der Ventilöffnung-Mittenachse stützenden Trägerelementkörperabschnitt aufweist, wobei das Ventilsitz-Dichtelement an einer axialen Seite des Trägerelementkörperabschnitts einen bezüglich der Ventilöffnung-Mittenachse axial über den Trägerelementkörperabschnitt hervorstehenden Dichtabschnitt aufweist.

Das erfindungsgemäß aufgebaute Ventil zeichnet sich dadurch aus, dass im Wesentlichen die ganze Ventilsitz-Dichtfläche an dem Dichtabschnitt ausgebildet ist.

Bei dem erfindungsgemäß aufgebauten Ventil besteht durch die Positionierung der Ventilsitz-Dichtfläche in einem axial bezüglich des Trägerelementkörperabschnitts versetzten Bereich im Wesentlichen kein axialer Überlapp zwischen der Ventilsitz-Dichtfläche und dem das Ventilsitz-Dichtelement tragenden und dieses grundsätzlich auch gegen Bewegung nach radial außen stützenden Trägerelementkörperabschnitt. Dies hat zur Folge, dass der zur Herstellung einer Dichtwirkung in Wechselwirkung mit dem Ventilelement bzw. der Ventilelement-Dichtfläche tretende Bereich des Ventilsitz-Dichtelements gegen Bewegung nach radial außen durch den Trägerelementkörperabschnitt im Wesentlichen nicht blockiert ist. Dies hat zur Folge, dass beim Herstellen und Aufheben der Dichtwechselwirkung zwischen der Ventilelement-Dichtfläche und der Ventilsitz-Dichtfläche das im Allgemeinen aus elastischem Material, wie zum Beispiel Gummimaterial, aufgebaute Ventilsitz-Dichtelement leichter verformt werden kann bzw. beim Herstellen der Dichtwechselwirkung und in der Schließstellung des Ventilelements das Ventilsitz-Dichtelement sich verbessert an die Außenumfangskontur des Ventilelements im Bereich der Ventilelement-Dichtfläche anschmiegen kann.

Zum Erreichen einer axial kompakten Bauart kann die Ventilsitz-Dichtfläche axial unmittelbar an den Trägerelementkörperabschnitt anschließen.

Um eine noch bessere Verformbarkeit des Ventilsitz-Dichtelements zuzulassen, kann die Ventilsitz-Dichtfläche in axialem Abstand zu dem Trägerelementkörperabschnitt angeordnet sein.

Die Blockierung des Ventilsitz-Dichtelements gegen Bewegung nach radial außen durch den Trägerelementkörperabschnitt kann dadurch verringert werden, dass eine axiale Erstreckungslänge des Trägerelementkörperabschnitts kleiner ist als eine maximale axiale Erstreckungslänge des Ventilsitz-Trägerelements.

Das Ventilsitz-Trägerelement kann in einem in der Offenstellung des Ventilelements von Gas durchströmbaren Ventilgehäuse getragen sein.

Dabei kann für eine stabile Positionierung des Ventilsitz-Trägerelements in dem Ventilgehäuse das Ventilsitz-Trägerelement durch Presspassung oder/und Materialschluss in dem Ventilgehäuse gehalten sein.

Um insbesondere dann, wenn das Ventilsitz-Trägerelement durch Presspassung in dem Ventilgehäuse gehalten ist, das Herstellen der Presspassung beim Einführen des Ventilsitz-Trägerelements in das Ventilgehäuse zu erleichtern, wird vorgeschlagen, dass an dem Ventilgehäuse oder/und an einem Außenumfangsbereich des Ventilsitz-Trägerelements an wenigstens einem axialen Endbereich eine Anfasung vorgesehen ist.

Um eine die Belastung des Ventilsitz-Dichtelements beim Öffnen und Schließen des Ventils verringernde doppelexzentrische Positionierung des Ventilelements zu erreichen, wird vorgeschlagen, dass die Schwenkachse bezüglich der Ventilöffnung-Mittenachse radial versetzt ist und bezüglich der Ventilsitz-Dichtfläche in Richtung der Ventilöffnung-Mittenachse axial versetzt ist.

Zum Erhalt eines stabilen Aufbaus kann das Ventilsitz-Trägerelement mit starrem Material, vorzugsweise Metallmaterial oder Kunststoffmaterial, insbesondere Hartkunststoff, aufgebaut sein. Eine gute Dichtwirkung kann insbesondere dann erreicht werden, wenn das Ventilsitz-Dichtelement mit elastischem Material, vorzugsweise Gummimaterial, aufgebaut ist.

Für eine stabile Verbindung des Ventilsitz-Trägerelements mit dem Ventilsitz-Dichtelement kann ein Element von Ventilsitz-Trägerelement und Ventilsitz-Dichtelement wenigstens zwei in Richtung der Ventilöffnung-Mittenachse in Abstand zueinander angeordnete, auf das andere Element von Ventilsitz-Trägerelement und Ventilsitz-Dichtelement zu radial hervorstehende, zwischen sich eine Aussparung bildende Vorsprünge umfassen, und das andere Element von Ventilsitz-Trägerelement und Ventilsitz-Dichtelement kann in Zuordnung zu der Aussparung einen in diese eingreifenden Vorsprung umfassen. Im Bereich derartiger radial ineinander eingreifender Vorsprünge bzw. Aussparungen können das Ventilsitz-Trägerelement und das Ventilsitz-Dichtelement beispielsweise durch Materialschluss, wie zum Beispiel Verkleben, Vulkanisieren oder Anformen, stabil miteinander verbunden werden.

Um beim Bewegen des Ventilelements zwischen seiner Offenstellung und seiner Schließstellung die Reibwechselwirkung mit dem Ventilsitz-Dichtelement gering zu halten, wird vorgeschlagen, dass das Ventilelement wenigstens in seinem in Kontakt mit dem Ventilsitz-Dichtelement tretenden Oberflächenbereich wenigstens bereichsweise mit reibungsminderndem Material, vorzugsweise PTFE-Material, also unter der eingetragenen Marke bzw. dem Handelsnamen Teflon bekanntes Material, ausgebildet ist.

Die Erfindung betrifft ferner ein Brennstoffzellensystem, umfassend eine Brennstoffzelleneinheit und wenigstens ein erfindungsgemäß aufgebautes Ventil zum wahlweisen Absperren und Freigeben einer Gasströmung zu oder/und von der Brennstoffzelleneinheit.

Die Brennstoffzelleneinheit kann einen Anodenbereich mit einem Anodengas-Zuführbereich und einem Anodenabgas-Abführbereich und einen Kathodenbereich mit einem Kathodengas-Zuführbereich und einem Kathodenabgas-Abführbereich umfassen. Um insbesondere die relativ großen Gasströme zu und von dem Kathodenbereich definiert regulieren zu können bzw. den Kathodenbereich im Wesentlichen gasdicht abschließen zu können, kann der Kathodengas-Zuführbereich ein erfindungsgemäß aufgebautes Ventil umfassen oder/und kann der Kathodenabgas-Abführbereich ein erfindungsgemäß aufgebautes Ventil umfassen.

Die vorliegende Erfindung wird nachfolgend mit Bezug auf die beiliegenden Figuren detailliert beschrieben. Es zeigt:
- Fig. 1: eine perspektivische Längsschnittansicht eines in einem Brennstoffzellensystem einsetzbaren Ventils in einer Schließstellung eines Ventilelements desselben;
- Fig. 2: eine der Fig. 1 entsprechende Längsschnittansicht des Ventils,
- Fig. 3: eine perspektivische Längsschnittansicht des Ventils in einer Offenstellung des Ventilelements;
- Fig. 4: eine der Fig. 3 entsprechende Längsschnittansicht des Ventils;
- Fig. 5: das Detail V in Fig. 4 vergrößert;
- Fig. 6: das Detail VI in Fig. 2 vergrößert;
- Fig. 7: eine der Fig. 6 entsprechende Ansicht einer alternativen Ausgestaltungsart des Ventils;
- Fig. 8: eine prinzipartige Darstellung eines Brennstoffzellensystems.

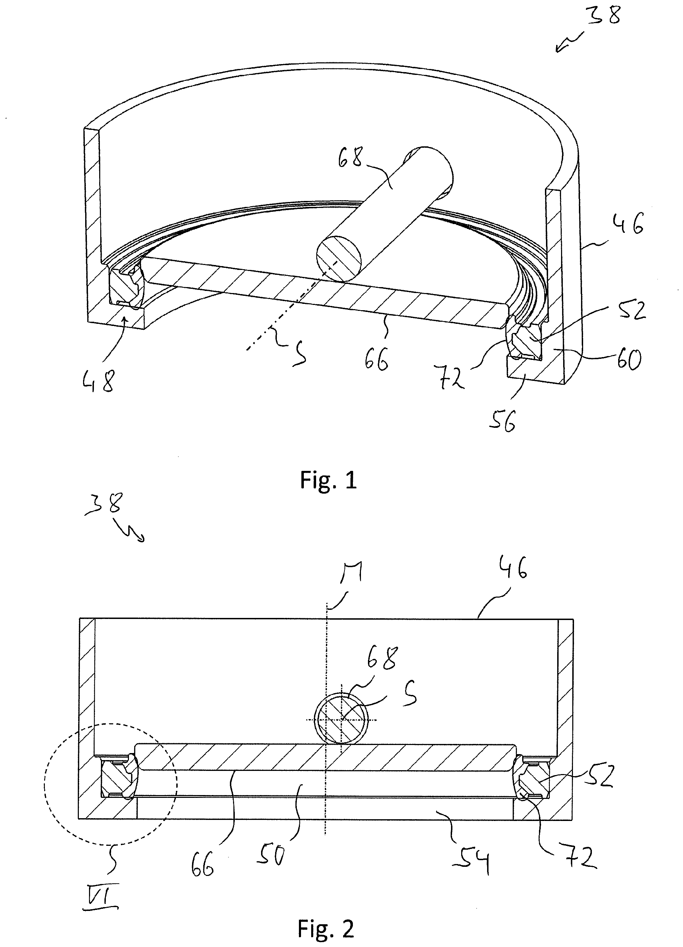

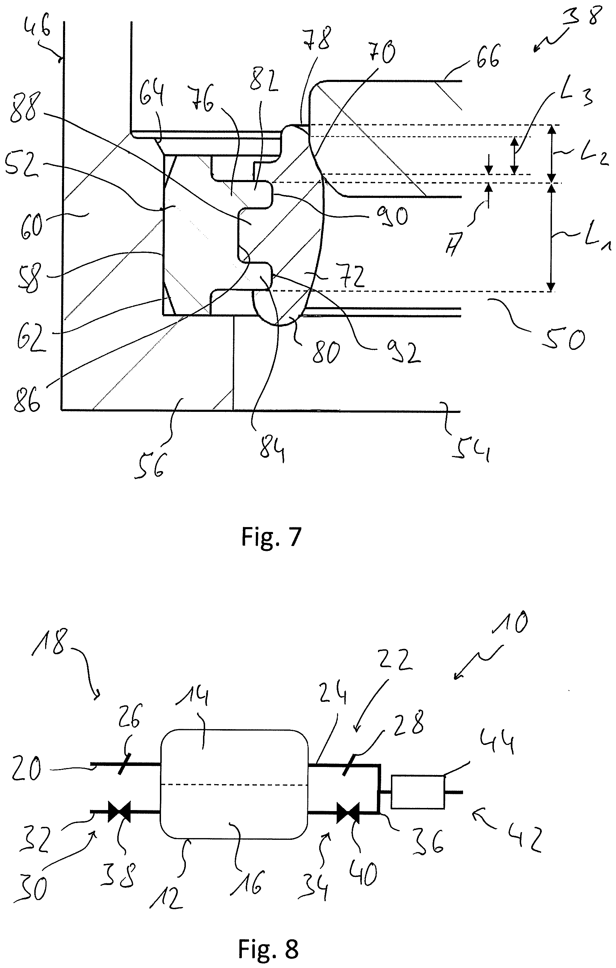

Bevor nachfolgend mit Bezug auf die Fig. 1 bis 7 detailliert der Aufbau eines beispielsweise in Verbindung mit einem Brennstoffzellensystem einsetzbaren Ventils der hier beschrieben wird, wird zunächst mit Bezug auf Fig. 8 der grundsätzliche Aufbau eines derartigen beispielsweise in einem Fahrzeug zur Erzeugung elektrischer Energie einsetzbaren Brennstoffzellensystems beschrieben.

Das Brennstoffzellensystem 10 umfasst eine beispielsweise mit mehreren Brennstoffzellenstapeln aufgebaute Brennstoffzelleneinheit 12 mit einem Anodenbereich 14 und einem Kathodenbereich 16. Ein Anodengas-Zuführbereich 18 umfasst eine Anodengas-Zuführleitung 20, über welche gasförmiger Wasserstoff bzw. ein wasserstoffhaltiges Gas in den Anodenbereich 14 eingespeist werden kann. Ein Anodenabgas-Abführbereich 22 umfasst eine Anodenabgas-Abführleitung 24, über welcher wasserstoffentreichertes Anodenabgas den Anodenbereich 14 verlassen kann. In Zuordnung zu der Anodengas-Zuführleitung 20 und der Anodenabgas-Abführleitung 24 kann jeweils ein Absperrorgan 26, 28 vorgesehen sein, durch welches der Gasstrom zu und aus dem Anodenbereich 14 reguliert werden kann bzw. der Anodenbereich 14 gasdicht abgeschlossen werden kann.

Ein Kathodengas-Zuführbereich 30 umfasst eine Kathodengas-Zuführleitung 32, über welche sauerstoffhaltiges Gas, beispielsweise Luft, in den Kathodenbereich 16 eingeleitet werden kann. Ein Kathodenabgas-Abführbereich 34 umfasst eine Kathodenabgas-Abführleitung 36, über welche sauerstoffentreichertes und Wasser bzw. Wasserdampf enthaltendes Kathodenabgas aus dem Kathodenbereich 16 abgeleitet werden kann.

In Zuordnung zu der Kathodengas-Zuführleitung 32 und der Kathodenabgas-Abführleitung 36 ist jeweils ein Ventil 38, 40 vorgesehen, durch welches der Gasstrom zu bzw. aus dem Kathodenbereich 16 reguliert werden kann und der Kathodenbereich 16 im Wesentlichen gasdicht abgeschlossen werden kann.

Die Fig. 8 veranschaulicht auch, dass die Anodenabgas-Abführleitung 24 und die Kathodenabgas-Abführleitung 36 beispielsweise stromabwärts des Absperrorgans 28 bzw. des Ventils 40 zusammengeführt sein können, um das Anodenabgas und das Kathodenabgas als Brennstoffzellenabgasstrom in eine Brennstoffzellenabgasanlage 42 einzuleiten. In der Brennstoffzellenabgasanlage 42 kann der Brennstoffzellenabgasstrom weiter behandelt werden. Beispielsweise können verschiedene Systembereiche 44 vorgesehen sein, welche zum Auskondensieren und Abscheiden von im Brennstoffzellenabgasstrom enthaltenem Wasser beitragen. Die Systembereiche 44 können beispielsweise einen Schalldämpfer umfassen, um den Transport von im Brennstoffzellensystem 10 generierten Geräuschen über das Brennstoffzellenabgas nach außen einzudämmen.

Es ist darauf hinzuweisen, dass insbesondere auch abhängig vom eingesetzten Brennstoffzellentyp das Brennstoffzellensystem grundsätzlich auch anders ausgebildet sein kann.

Nachfolgend wird der Aufbau eines vorteilhafterweise in Verbindung mit dem Kathodenbereich 16 zu verwendenden Ventils 38 bzw. 40 beschrieben. Dabei wird Bezug genommen auf das Ventil 38, und es ist zu betonen, dass das Ventil 40 in gleicher Weise aufgebaut sein kann, wie das nachfolgend zunächst mit Bezug auf die Fig. 1 bis 6 detailliert beschriebene Ventil 38.

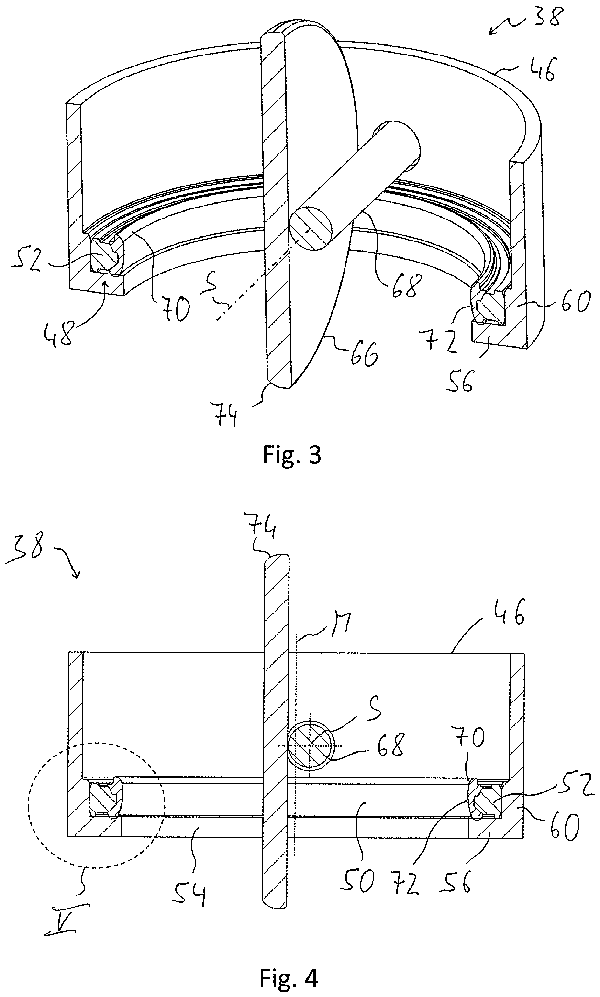

Das in den Fig. 1 und 2 in einer Schließstellung und in den Fig. 3 und 4 in einer Offenstellung dargestellte Ventil 38 umfasst ein beispielsweise rohrartiges Ventilgehäuse 46, in welchem ein allgemein mit 48 bezeichneter Ventilsitz getragen ist. Der Ventilsitz 48 umfasst ein eine Ventilöffnung-Mittenachse M einer Ventilöffnung 50 ringartig beispielsweise als Kreisring umgebendes Ventilsitz-Trägerelement 52. Das Ventilsitz-Trägerelement 52 ist aus im Wesentlichen starrem Material aufgebaut. Beispielsweise kann hierfür Metallmaterial oder Hartkunststoff eingesetzt werden. Das Ventilsitz-Trägerelement 52 ist in Richtung der Ventilöffnung-Mittenachse M axial an einem eine Gehäuseöffnung 54 des Ventilgehäuses 46 umgrenzenden Stufenbereich 56 des Ventilgehäuses 46 abgestützt. Mit einem Außenumfangsbereich 58 ist das Ventilsitz-Trägerelement 52 nach radial außen an einem beispielsweise im Wesentlichen zylindrischen Abschnitt 60 des Ventilgehäuses 46 abgestützt. Dabei kann ein fester Verbund des Ventilsitz-Trägerelements 52 mit dem Ventilgehäuse 46 durch Presspassung erreicht werden. Um das Einführen des Ventilsitz-Trägerelements 52 in den im Wesentlichen zylindrischen Abschnitt 60 zu erleichtern, kann das Ventilsitz-Trägerelement 52 zumindest an seinem beim Einführen in axialer Richtung vorangehenden axialen Endbereich eine Anfasung 62 aufweisen. Auch der im Wesentlichen zylindrische Abschnitt 60 des Ventilgehäuses 46 kann eine derartige Anfasung 64 aufweisen.

Der im Wesentlichen zylindrische Abschnitt 60 kann leicht konisch und in der Einführrichtung sich verjüngend ausgebildet sein, um eine verstärkte Presssitzwirkung erzielen zu können. Alternativ oder zusätzlich kann der feste Verbund des Ventilsitz-Trägerelements 58 mit dem Ventilgehäuse 46 durch Materialschluss erreicht werden. Abhängig vom Aufbaumaterial des Ventilsitz-Trägerelements 52 und des Ventilgehäuses 46 kann dies beispielsweise durch Verschweißen, Verlöten oder Verkleben erfolgen.

Das Ventil 38 umfasst ferner ein scheibenartiges Ventilelement 66. Das Ventilelement 66 ist in dem Ventilgehäuse 46 an einer um eine Schwenkachse S drehbaren Schwenkwelle 68 fest getragen. Durch Drehung der Schwenkwelle 68 um die Schwenkachse S kann das Ventilelement 66 zwischen der in den Fig. 1 und 2 dargestellten Schließstellung, in welcher dieses im Wesentlichen orthogonal zur Ventilöffnung-Mittenachse M ausgerichtet ist und eine Ventilelement-Mittenachse im Wesentlichen der Ventilöffnung-Mittenachse M entspricht, und der in den Fig. 3 und 4 dargestellten Offenstellung verschwenkt werden, in welcher das scheibenartige Ventilelement 66 im Wesentlichen parallel zur Ventilöffnung-Mittenachse M ausgerichtet ist.

Das Ventil 38 bzw. das Ventilelement 66 ist doppelexzentrisch ausgebildet. Dies bedeutet, dass die Schwenkachse S der Schwenkwelle 68 bezüglich der Ventilöffnung-Mittenachse M radial versetzt und dazu vorzugsweise parallel ist und bezüglich einer nachfolgend detailliert erläuterten Ventilsitz-Dichtfläche 70 eines am Ventilsitz-Trägerelement 52 fest getragenen Ventilsitz-Dichtelements 72 in Richtung der Ventilöffnung-Mittenachse M axial versetzt ist. Durch diese doppelexzentrische Positionierung der Schwenkachse S wird eine zu einem übermäßigen Verschleiß des mit elastischem Material, beispielsweise Gummimaterial, aufgebauten Ventilsitz-Dichtelements 72 führende Wechselwirkung zwischen dem die Dichtfläche 70 aufweisenden Bereich des Ventilsitz-Dichtelements 72 und einem eine Ventilelement-Dichtfläche 74 bereitstellenden Bereich des Ventilelements 68 vermieden.

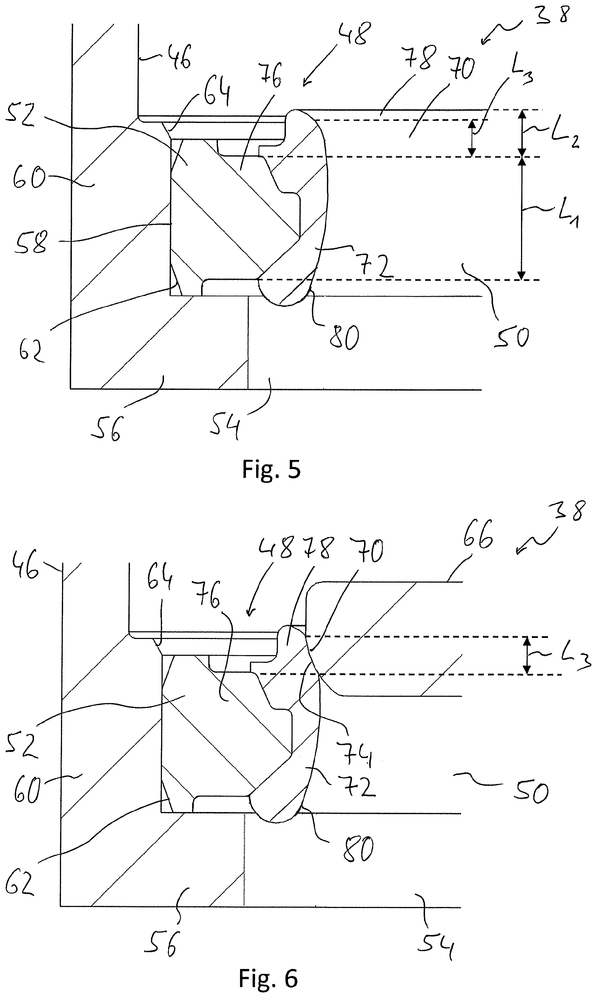

Das in Fig. 5 detaillierter dargestellte Ventilsitz-Dichtelement 72 kann an dem Ventilsitz-Trägerelement 52 beispielsweise durch Materialschluss festgelegt sein. Dieser Materialschluss kann beispielsweise durch Verklebung oder durch Anformen bzw. Vulkanisieren erreicht werden.

Zur Anbindung des Ventilsitz-Dichtelements 72 weist das Ventilsitz-Trägerelement 52 einen Trägerelementkörperabschnitt 76 auf, dessen axiale Ausdehnung kleiner ist, als die maximale axiale Ausdehnung des Ventilsitz-Trägerelements 52. Der Trägerelementkörperabschnitt 76 erstreckt sich somit in einem in Fig. 5 erkennbaren axialen Längenabschnitt L₁ des Ventilsitzes 48.

Das Ventilsitz-Dichtelement 72 erstreckt sich axial über diesen Längenabschnitt L₁ und ist im axialen Erstreckungsbereich dieses Längenabschnitts L₁ durch den Trägerelementkörperabschnitt 76 nach radial außen abgestützt.

Das Ventilsitz-Dichtelement 72 weist an seinem der Schwenkwelle S naheliegenden axialen Endbereich einen in einem Längenabschnitt L₂ des Ventilsitzes 48 über den Trägerelementkörperabschnitt 76 axial hervorstehenden Dichtabschnitt 78 auf. Im Bereich des Längenabschnitts L₂ bzw. des Dichtabschnitts 78 ist das Ventilsitz-Dichtelement 72 nicht durch unmittelbare Abstützwechselwirkung mit dem Ventilsitz-Trägerelement 52 bzw. dem Trägerelementkörperabschnitt 76 nach radial außen abgestützt.

Es sei darauf hingewiesen, dass auch in seinem anderen axialen Endbereich das Ventilsitz-Dichtelement 72 einen wulstartig über den Trägerelementkörperabschnitt 76 axial hervorstehenden Dichtelementabschnitt 80 aufweisen kann.

Die an dem Ventilsitz-Dichtelement 72 ausgebildete Ventilsitz-Dichtfläche 70 liegt im Wesentlichen vollständig innerhalb des Längenabschnitts L₂ und überlappt sich mit dem Längenabschnitt L₁ axial im Wesentlichen nicht. Dies bedeutet, dass die in der Schließstellung des Ventilelements 66 in Dichtwechselwirkung mit der Dichtfläche 74 des Ventilelements 66 stehende Ventilsitz-Dichtfläche 70 in Richtung der Ventilöffnung-Mittenachse M außerhalb des axialen Erstreckungsbereichs des Trägerelementkörperabschnitts 76 und somit in einem Bereich des Ventilsitz-Dichtelements 72 liegt, der durch das Ventilsitz-Trägerelement 52 und insbesondere den Trägerelementkörperabschnitt 76 nicht unmittelbar gegen Bewegung nach radial außen abgestützt bzw. blockiert ist.

Aufgrund dieser axial bezüglich des Trägerelementkörperabschnitts 76 versetzen, im dargestellten Ausgestaltungsbeispiel unmittelbar an diesen anschließenden Positionierung der Ventilsitz-Dichtfläche 70 ist das Ventilsitz-Dichtelement 72 beim Herstellen und auch beim Aufheben des Schließzustands des Ventilelements 76 vergleichsweise leicht nach radial außen verformbar, da das Ventilsitz-Dichtelement 72 im gesamten axialen Erstreckungsbereich der Ventilsitz-Dichtfläche 70 nicht durch andere Bauteile gegen eine Bewegung nach radial außen blockiert ist. Dadurch wird ein durch die zwischen dem Ventilelement 66 und dem Ventilsitz-Dichtelement 72 bestehende Wechselwirkung erzeugter Verschleiß des Ventilsitz-Dichtelements 72 minimiert. Gleichzeitig kann das Ventilsitz-Dichtelement 72 so geformt werden, dass es aufgrund der verbesserten radialen Verformbarkeit im Längenabschnitt L₂ sich in der Schließstellung des Ventilelements 66 besser an dessen Ventilelement-Dichtfläche 74 anschmiegen kann, wodurch eine verbesserte Dichtwirkung erreichbar ist.

Bei einer in Fig. 7 dargestellten alternativen Ausgestaltungsform des Ventils 38 ist die Ventilsitz-Dichtfläche 70 im Längenabschnitt L₂ derart positioniert, dass ein axialer Abstand A zwischen dem Längenabschnitt L₃, also der Ventilsitz-Dichtfläche 70, und dem Längenabschnitt L₁, also dem Trägerelementkörperabschnitt 76 besteht. Dies führt zu einer noch besseren radialen Verformbarkeit des Ventilsitz-Dichtelements 72 im Bereich seiner Ventilsitz-Dichtfläche 70.

Bei der in Fig. 7 dargestellten Ausgestaltungsart des Ventils 38 ist das Ventilsitz-Trägerelement 52 in seinem Trägerelementkörperabschnitt 76 an der radialen Innenseite mit einer durch zwei nach radial innen hervorstehende, um die Ventilöffnung-Mittenachse M vorzugsweise vollständig umlaufende Vorsprünge 82, 84 axial begrenzten, nach radial innen offenen Aussparung 86 ausgebildet. Das Ventilsitz-Dichtelement 72 weist einen nach radial außen hervorstehenden, in die Aussparung 86 eingreifenden und diese vorzugsweise vollständig ausfüllenden Vorsprung 88 auf. Beidseits des Vorsprungs 88 sind nach radial außen offene und die Vorsprünge 82, 84 aufnehmende Aussparungen 90, 92 gebildet. Das Ventilsitz-Dichtelement 72 umgreift somit mit dem Dichtabschnitt 78 einerseits und dem Dichtelementabschnitt 80 andererseits die Vorsprünge 80, 82 an deren axial orientierten Seiten.

Mit dieser Struktur des Ventilsitz-Trägerelement 52 wird durch die wechselweise ineinander eingreifenden Vorsprünge und Aussparungen eine vergleichsweise große Fläche generiert, an welcher das Ventilsitz-Dichtelement 72 und das Ventilsitz-Trägerelement 52 miteinander in Kontakt stehen und vorzugsweise durch Materialschluss aneinander festgelegt sind. Dies gewährleistet eine auch bei häufig durchgeführten verschwenkt Vorgängen des Ventilelement 66 eine langlebige stabile und insbesondere gasdichte Verbindung des Ventilsitz-Dichtelements 72 mit dem Ventilsitz-Trägerelement 52.

Grundsätzlich kann im Sinne der vorliegenden Erfindung auch ein geringer axialer Überlapp zwischen dem Längenabschnitt L₃, also der Ventilsitz-Dichtfläche 70, und dem Längenabschnitt L₁, also dem Trägerelementkörperabschnitt 76, bestehen, wenn dieser Überlapp die radiale Verformbarkeit des Ventilsitz-Dichtelements 72 im Bereich seiner Ventilsitz-Dichtfläche nicht beeinträchtigt. Ein derartiger Überlapp sollte einen Wert von beispielsweise etwa 5% der axialen Erstreckung des Längenabschnitts L₃ nicht übersteigen.

Die Schwenkwelle 68 kann zum Erreichen einer definierten Dichtwechselwirkung zwischen dem Ventilelement 66 und dem Ventilsitz 48 in Richtung der Schwenkwelle S beidseits des Ventilelements 66 am Ventilgehäuse 66 drehbar gelagert sein. Auch eine derartige beidseitige Lagerung der Schwenkwelle 68 trägt insbesondere in Verbindung mit der vorangehend detailliert beschriebenen Formgebung des Ventilsitz-Dichtelements 72 zu einer verbesserten Dichtwechselwirkung und aufgrund definierter Bewegungsverhältnisse einem verringerten Verschleiß des Ventilsitz-Dichtelements 72 bei.

Um bei dem vorangehend beschriebenen Ventil 38 bzw. 40 beim Bewegen des Ventilelements 66 zwischen seiner Offenstellung und seiner Schließstellung die Reibwechselwirkung mit dem Ventilsitz-Dichtelement 72 gering zu halten, kann das Ventilelement 66 insbesondere im Bereich seiner Ventilelement-Dichtfläche 74 bzw. in allen im Verlaufe dieser Bewegung mit dem Ventilsitz-Dichtelement 72 in Kontakt tretenden Oberflächenbereichen zumindest teilweise, vorzugsweise vollständig mit reibungsminderndem Material ausgebildet, beispielsweise beschichtet sein. Als derartiges Material kann beispielsweise unter dem Handelsnamen bzw. der eingetragenen Marke bekanntes Teflon-Material verwendet werden.

## Patentansprüche

1. Ventil, insbesondere für ein Brennstoffzellensystem, umfassend:
- ein um eine Schwenkachse (S) zwischen einer Offenstellung und einer Schließstellung verschwenkbares, scheibenartiges Ventilelement (66), wobei an einem Außenumfangsbereich des Ventilelements (66) eine ringartige Ventilelement-Dichtfläche (74) vorgesehen ist,
- einen eine Ventilöffnung (50) umgebenden, ringartigen Ventilsitz (48), wobei an einem Innenumfangsbereich des Ventilsitzes (48) eine eine Ventilöffnung-Mittenachse (M) ringartig umgebende, in der Schließstellung des Ventilelements (66) mit der Ventilelement-Dichtfläche (74) in Kontakt stehende Ventilsitz-Dichtfläche (70) vorgesehen ist, wobei der Ventilsitz (48) ein ringartiges Ventilsitz-Trägerelement (52) und ein an dem Ventilsitz-Trägerelement (52) getragenes, ringartiges Ventilsitz-Dichtelement (72) umfasst, wobei die Ventilsitz-Dichtfläche (70) an dem Ventilsitz-Dichtelement (72) vorgesehen ist, wobei das Ventilsitz-Trägerelement (56) einen das Ventilsitz-Dichtelement (72) gegen Bewegung nach radial außen bezüglich der Ventilöffnung-Mittenachse (M) stützenden Trägerelementkörperabschnitt (76) aufweist, wobei das Ventilsitz-Dichtelement (72) an einer axialen Seite des Trägerelementkörperabschnitts (76) einen bezüglich der Ventilöffnung-Mittenachse (M) axial über den Trägerelementkörperabschnitt (76) hervorstehenden Dichtabschnitt aufweist,
**dadurch gekennzeichnet, dass** im Wesentlichen die ganze Ventilsitz-Dichtfläche (70) an dem Dichtabschnitt (78) ausgebildet ist.

2. Ventil nach Anspruch 1,
**dadurch gekennzeichnet, dass** die Ventilsitz-Dichtfläche (70) axial unmittelbar an den Trägerelementkörperabschnitt (76) anschließt.

3. Ventil nach Anspruch 1,
**dadurch gekennzeichnet, dass** die Ventilsitz-Dichtfläche (70) in axialem Abstand (A) zu dem Trägerelementkörperabschnitt (76) angeordnet ist.

4. Ventil nach einem der Ansprüche 1-3,
**dadurch gekennzeichnet, dass** eine axiale Erstreckungslänge des Trägerelementkörperabschnitts (76) kleiner ist als eine maximale axiale Erstreckungslänge des Ventilsitz-Trägerelements (52).

5. Ventil nach einem der Ansprüche 1-4,
**dadurch gekennzeichnet, dass** das Ventilsitz-Trägerelement (52) in einem in der Offenstellung des Ventilelements (66) von Gas durchströmbaren Ventilgehäuse (46) getragen ist.

6. Ventil nach Anspruch 5,
**dadurch gekennzeichnet, dass** das Ventilsitz-Trägerelement (52) in dem Ventilgehäuse (46) durch Presspassung oder/und Materialschluss gehalten ist.

7. Ventil nach Anspruch 5,
**dadurch gekennzeichnet, dass** an dem Ventilgehäuse (46) oder/und an einem Außenumfangsbereich (58) des Ventilsitz-Trägerelements (52) an wenigstens einem axialen Endbereich eine Anfasung (62) vorgesehen ist.

8. Ventil nach einem der Ansprüche 1-7,
**dadurch gekennzeichnet, dass** die Schwenkachse (S) bezüglich der Ventilöffnung-Mittenachse (M) radial versetzt ist und bezüglich der Ventilsitz-Dichtfläche (70) in Richtung der Ventilöffnung-Mittenachse (M) axial versetzt ist.

9. Ventil nach einem der Ansprüche 1-8,
**dadurch gekennzeichnet, dass** das Ventilsitz-Trägerelement (52) mit starrem Material, vorzugsweise Metallmaterial oder Kunststoffmaterial, aufgebaut ist, und dass das Ventilsitz-Dichtelement (72) mit elastischem Material, vorzugsweise Gummimaterial, aufgebaut ist.

10. Ventil nach einem der Ansprüche 1-9,
**dadurch gekennzeichnet, dass** ein Element von Ventilsitz-Trägerelement (52) und Ventilsitz-Dichtelement (72) wenigstens zwei in Richtung der Ventilöffnung-Mittenachse (M) in Abstand zueinander angeordnete, auf das andere Element von Ventilsitz-Trägerelement (52) und Ventilsitz-Dichtelement (72) radial zu hervorstehende, zwischen sich eine Aussparung (86) bildende Vorsprünge (82, 84) umfasst, und dass das andere Element von Ventilsitz-Trägerelement (52) und Ventilsitz-Dichtelement (72) in Zuordnung zu der Aussparung (86) einen in diese eingreifenden Vorsprung (88) umfasst.

11. Ventil nach einem der Ansprüche 1-10,
**dadurch gekennzeichnet, dass** das Ventilelement (66) wenigstens in seinem in Kontakt mit dem Ventilsitz-Dichtelement (72) tretenden Oberflächenbereich wenigstens bereichsweise mit reibungsminderndem Material, vorzugsweise PTFE-Material, ausgebildet ist.

12. Brennstoffzellensystem, umfassend eine Brennstoffzelleneinheit (12) und wenigstens ein Ventil (38, 40) nach einem der Ansprüche 1-11 zum wahlweisen Absperren und Freigeben einer Gasströmung zu oder/und von der Brennstoffzelleneinheit (12).

13. Brennstoffzellensystem nach Anspruch 12,
**dadurch gekennzeichnet, dass** die Brennstoffzelleneinheit (12) einen Anodenbereich (14) mit einem Anodengas-Zuführbereich (18) und einem Anodenabgas-Abführbereich (22) und einen Kathodenbereich (16) mit einem Kathodengas-Zuführbereich (30) und einem Kathodenabgas-Abführbereich (34) umfasst, wobei der Kathodengas-Zuführbereich (30) ein Ventil (38) nach einem der Ansprüche 1-11 umfasst oder/und Kathodenabgas-Abführbereich ein Ventil (40) nach einem der Ansprüche 1-11 umfasst.
